# EUROPÄISCHE PATENTSCHRIFT

(11) **EP 1 979 793 B1**
(45) Veröffentlichungstag und Bekanntmachung des Hinweises auf die Patenterteilung: **28.12.2011**
(21) Anmeldenummer: 07703884.2
(22) Anmeldetag: 16.01.2007
(51) Int. Cl.: G05B 19/042

(54) **VERFAHREN UND VORRICHTUNG ZUR ADRESSVERGABE IN EINEM SYSTEM MIT MEHREREN PARALLEL ANGEORDNETEN GENERATOREINHEITEN**
METHOD AND DEVICE FOR ASSIGNING ADDRESSES IN A SYSTEM COMPRISING SEVERAL GENERATOR UNITS ARRANGED IN PARALLEL
PROCÉDÉ ET DISPOSITIF D'ATTRIBUTION D'ADRESSES DANS UN SYSTÈME COMPORTANT PLUSIEURS UNITÉS DE GÉNÉRATEUR DISPOSÉES DE FAÇON PARALLÈLE

(30) Priorität: 16.01.2006 DE 102006001982
(43) Veröffentlichungstag der Anmeldung: 15.10.2008
(73) Patentinhaber: Robert Bosch GmbH, 70442 Stuttgart (DE)
(72) Erfinder: SUELZLE, Helmut, 71691 Freiberg (DE); PEUSER, Thomas, 71636 Ludwigsburg (DE)
(86) Internationale Anmeldenummer: PCT/EP2007/050369
(87) Internationale Veröffentlichungsnummer: WO 2007/082872

(56) Entgegenhaltungen:
- EP-A- 1 503 262
- EP-A1- 1 530 108
- DE-A1- 4 108 861
- DE-A1- 19 750 470
- US-B1- 6 738 920

## Beschreibung

Die Erfindung betrifft ein Verfahren und eine Vorrichtung zur Adressvergabe in einem System mit mehreren parallel zueinander angeordneten Generatoreinheiten. Mittels derartig parallel geschalteter Generatoreinheiten kann beispielsweise in einem Kraftfahrzeug die Versorgungsspannung für die Verbraucher des Bordnetzes bereitgestellt werden.

### Stand der Technik

Es ist bereits bekannt, das elektrische Bordnetz eines Kraftfahrzeugs unter Verwendung eines Generators zu versorgen.

Weiterhin ist es bereits bekannt, das Bordnetz bestimmter Fahrzeuge, beispielsweise von Sicherheitsfahrzeugen, Rettungsfahrzeugen und Nutzfahrzeugen, unter Verwendung von mindestens zwei Generatoren mit Energie zu versorgen, um den geforderten Leistungsbedarf und/oder die geforderte Zuverlässigkeit der elektrischen Versorgung gewährleisten zu können.

Der Verschleiß und damit auch die Lebensdauer eines Generators hängt von mehreren Faktoren ab. Einer dieser Faktoren ist seine elektrische Auslastung. Je größer die elektrische Auslastung eines Generators ist, desto größer ist sein Verschleiß und desto niedriger ist seine restliche Lebensdauer. Es ist deshalb wünschenswert, die Auslastung der verwendeten Generatoren nach anwendungsspezifischen Strategien steuern zu können. Anwendungsspezifische Strategien sind beispielsweise eine gleichmäßige Auslastung oder eine sehr einseitige Verteilung der Auslastung.

In der DE 10 2005 12 270.1 sind ein Verfahren und eine Vorrichtung zur Bereitstellung der Versorgungsspannung für die Verbraucher eines Fahrzeug-Bordnetzes unter Verwendung mehrerer Generatoren beschrieben. Jedem der Generatoren ist eine mindestens einen Endstufentransistor aufweisende Regeleinheit zugeordnet. Um den Auslastungsgrad der Generatoren in Übereinstimmung zu bringen, wird in einer der Regeleinheiten ein impulsbreitenmoduliertes Steuersignal oder ein daraus abgeleitetes, das Tastverhältnis des impulsbreitenmodulierten Signals beschreibendes Steuersignal gebildet und den Endstufentransistoren aller Regeleinheiten zugeführt.

Weiterhin ist aus der DE 41 08 861 A1 eine Einrichtung mit parallel geschalteten Generatoren bekannt. Bei dieser bekannten Einrichtung ist jedem der Generatoren ein Spannungsregler zugeordnet. Weiterhin weist die bekannte Einrichtung mindestens eine Batterie auf, deren einer Anschluss über einen Zündschalter mit dem Spannungsregler verbindbar ist. Ferner ist eine Ladekontrolleinrichtung vorgesehen, die mit dem Zündschalter und den Spannungsreglern in Verbindung steht und über ein Schaltmittel mit dem vorzugsweise auf Masse liegenden negativen Anschluss der Batterie verbindbar ist. Zwischen der Ladekontrolleinrichtung, den Spannungsreglern und dem genannten Schaltmittel liegt eine Schaltungsanordnung mit mehreren in einer Richtung leitenden und in einer Richtung sperrenden Bauelementen. Durch diese bekannte Einrichtung soll erreicht werden, dass durch den Einsatz zweier Generatoren eine hohe elektrische Leistung erzeugt werden kann und dass mit einer einzigen Anzeige, beispielsweise einer Ladekontrolllampe, auftretende Fehler in einem der beiden Generator-Spannungsregler-Systeme angezeigt werden können, wobei das andere Generator-Spannungsregler-System problemlos weiterarbeiten kann.

### Vorteile der Erfindung

Ein Verfahren mit den im Patentanspruch 1 angegebenen Merkmalen weist demgegenüber den Vorteil auf, dass die zum Gesamtsystem gehörigen einzelnen Generatoreinheiten jeweils eine eigene individuelle Adresse aufweisen. Aufgrund dieser eigenen individuellen Adresse sind sie unterscheidbar und können bei Bedarf individuell angesprochen werden. Diese individuelle Ansprache kann durch ein Steuergerät erfolgen, das mit den Generatoreinheiten über einen Datenbus verbunden ist. Beispielsweise richtet das Steuergerät eine Diagnoseanfrage an eine der Generatoreinheiten. Diese antwortet dem Steuergerät, indem sie ihm für die Diagnose relevante Daten zusammen mit der individuellen Adresse zurücksendet.

Ein besonderer Vorteil der Erfindung besteht darin, dass es zur Adressvergabe keiner externen Codierung und auch keiner externen Beschaltung bedarf, die beispielsweise bereits beim Aufbau der Schaltung vorgegeben werden müsste. Bei der vorliegenden Erfindung ordnen sich die weiteren Generatoreinheiten selbst und automatisch jeweils eine individuelle Adresse zu. Dies geschieht dadurch, dass sie jeweils ein am Steuersignalausgang einer ihr vorgeschalteten Generatoreinheit ausgegebenes Kennungssignal empfangen und sich selbst eine vom jeweils empfangenen Kennungssignal abhängige individuelle Adresse zuzuordnen, die von der Länge des empfangenen Kennungssignals abhängig ist.

In vorteilhafter Weise wird die Selbstzuordnung der individuellen Adressen von der ersten Generatoreinheit initiiert, welcher ihrerseits über ihren Steuersignaleingang ein spezifisches Signal zugeführt wird, anhand dessen sie sich als Master identifiziert.

Weist die erste Generatoreinheit eine Datenschnittstelle auf, dann kann ihr über diese Datenschnittstelle ein Aufforderungssignal zugeführt werden, nach dessem Empfang die erste Generatoreinheit die Ausgabe eines Kennungssignals initiiert. Dies hat den Vorteil, dass beispielsweise ein an den Datenbus angeschlossenes Steuergerät den Zeitpunkt der Adressvergabe in Abhängigkeit von vorliegenden Erfordernissen wählen kann.

Durch die im Anspruch 4 angegebenen Merkmale wird in vorteilhafter Weise ermöglicht, dass die jeweilige Generatoreinheit aus der zeitlichen Länge des Kennungssignals Rückschlüsse auf ihre Position innerhalb der Parallelschaltung der Generatoreinheiten ableiten kann. Beispielsweise entspricht die Position der Generatoreinheit der Länge des am Steuersignaleingang empfangenen Kennungssignals in Zeiteinheiten des empfangenen Signals zuzüglich 1. So befindet sich eine Generatoreinheit, die an ihrem Steuersignaleingang ein Kennungssignal empfängt, dessen Länge einer Zeiteinheit entspricht, auf der Position 2, d. h. sie ist der als Master dienenden Generatoreinheit unmittelbar nachgeschaltet.

Wird von jeder Generatoreinheit das von ihr an ihrem Steuersignalausgang ausgegebene Kennungssignal mehrmals ausgegeben, wie es im Anspruch 5 angegeben ist, dann ist die Wahrscheinlichkeit, dass bei der Adressvergabe Fehler auftreten, reduziert.

Gemäß den Merkmalen der Patentansprüche 6 und 7 übermitteln die Generatoreinheiten ihre individuelle Adresse jeweils über einen Datenbus an ein Steuergerät. Dies kann automatisch erfolgen, nachdem die jeweilige Generatoreinheit oder nachdem alle Generatoreinheiten sich selbst ihre individuelle Adresse zugeordnet haben. Alternativ dazu kann das Steuergerät nach Ablauf einer vorgegebenen Zeitspanne nach dem Auftreten eines Startsignals automatisch ein Anfragesignal über den Datenbus ausgeben, das die Generatoreinheiten empfangen und entsprechend beantworten.

Ist dem Steuergerät durch diese Adressenübermittlung bekannt, wie viele Generatoreinheiten für den Parallelbetrieb zur Verfügung stehen und welche Adresse jeder dieser Generatoreinheiten zugeordnet ist, dann kann das Steuergerät diese Kenntnisse im späteren Betrieb dazu verwenden, jede der Generatoreinheiten über den Datenbus individuell zu adressieren und der jeweiligen Generatoreinheit Anfragen oder Befehle zu übermitteln oder von der jeweiligen Generatoreinheit Daten abzurufen.

Weitere vorteilhafte Eigenschaften der Erfindung ergeben sich aus deren beispielhafter Erläuterung anhand der Figur.

### Zeichnung

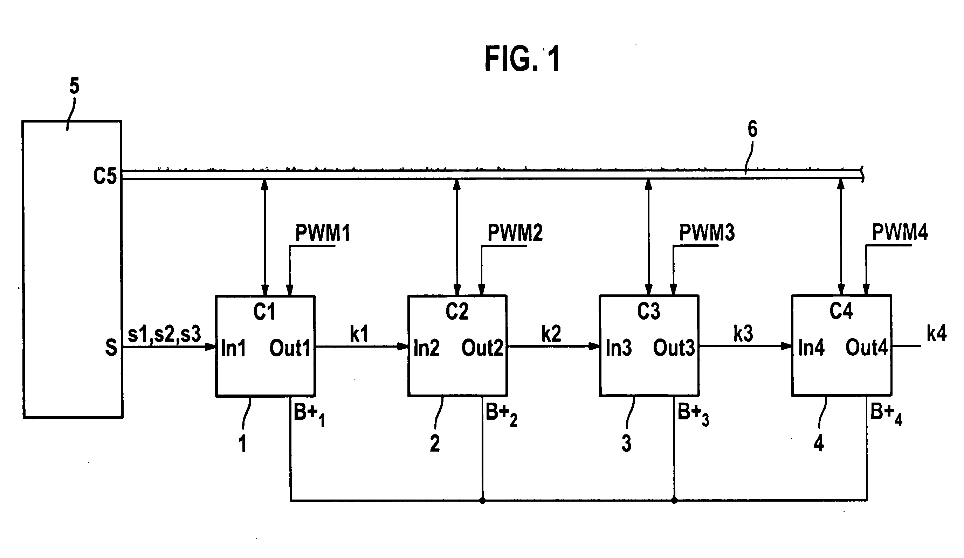

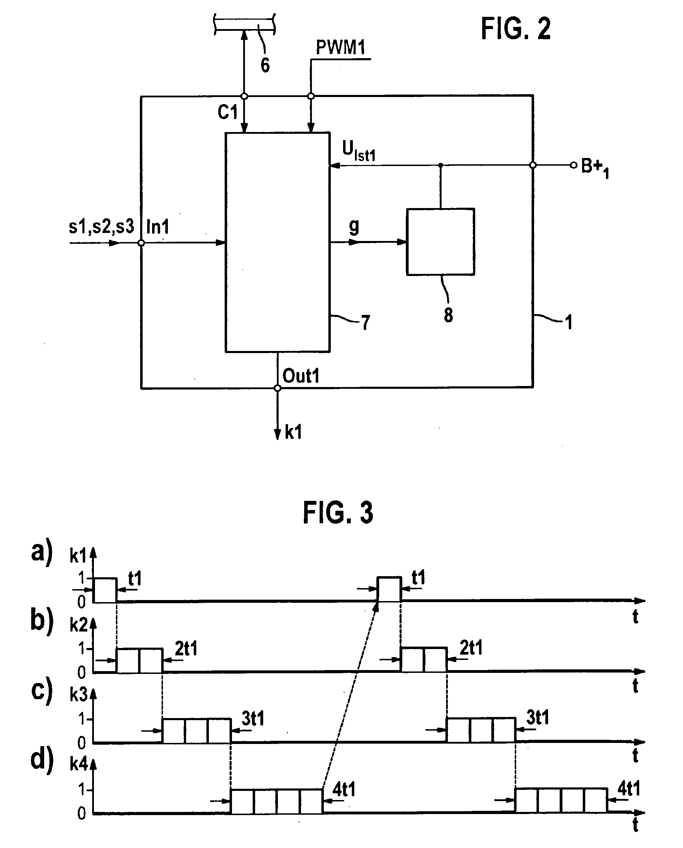

Die Figur 1 zeigt eine Blockdarstellung zur Erläuterung der erfindungsgemäßen Adressvergabe. Die Figur 2 zeigt eine detailliertere Darstellung der ersten Generatoreinheit 1 von Figur 1. Die Figur 3 zeigt Zeitdiagramme zur Veranschaulichung der erfindungsgemäßen Adressvergabe.

### Beschreibung

Die Figur 1 zeigt eine Blockdarstellung zur Erläuterung der erfindungsgemäßen Adressvergabe.

In dieser Blockdarstellung sind eine erste Generatoreinheit 1, eine zweite Generatoreinheit 2, eine dritte Generatoreinheit 3 und eine vierte Generatoreinheit 4 enthalten. Diese Generatoreinheiten sind bezüglich ihrer Funktion, die in der Bereitstellung einer Versorgungsgleichspannung für die Verbraucher eines Fahrzeug-Bordnetzes besteht, parallel zueinander geschaltet.

Der ersten Generatoreinheit 1 wird ein pulsbreitenmoduliertes Ansteuersignal PWM1, der zweiten Generatoreinheit 2 ein pulsbreitenmoduliertes Ansteuersignal PWM2, der dritten Generatoreinheit 3 ein pulsbreitenmoduliertes Ansteuersignal PWM3 und der vierten Generatoreinheit 4 ein pulsbreitenmoduliertes Ansteuersignal PWM4 zugeführt. Diese pulsbreitenmodulierte Signale, die von einer in der Figur 1 nicht dargestellten Signalquelle zur Verfügung gestellt werden, werden von einem Regler der jeweiligen Generatoreinheit in Generatorsteuersignale umgesetzt und dem Generator der jeweiligen Generatoreinheit zugeführt.

Dieser Generator stellt in Abhängigkeit von dem ihm zugeführten Generatorsteuersignal an seinem Ausgang einen Spannungsistwert zur Verfügung, der in Form einer positiven Versorgungsspannung am Spannungsversorgungsausgang der jeweiligen Generatoreinheit vorliegt.

Wie aus der Figur 1 ersichtlich ist, liegen an den Spannungsversorgungsausgängen der Generatoreinheiten positive Versorgungsspannungen B+₁, B+₂, B+₃ und B+₄ an. Da diese Spannungsversorgungsausgänge miteinander verbunden sind, ist die insgesamt bereitgestellte Versorgungsspannung aus den von den Generatoreinheiten 1, 2, 3 und 4 bereitgestellten Versorgungsspannungen zusammengesetzt. Durch diese Parallelschaltung mehrerer Generatoreinheiten ist gewährleistet, dass der im Betrieb geforderte Leistungsbedarf und die geforderte Zuverlässigkeit der Spannungsversorgung der Verbraucher eines Fahrzeugbordnetzes geigeben ist.

Im Betrieb der in der Figur 1 gezeigten Vorrichtung tritt ein Verschleiß der Generatoreinheiten bzw. Generatoren auf. Aus diesem Grund ist es von hoher Wichtigkeit, die einzelnen Generatoren zu überwachen, um Informationen über den Zustand der Generatoren zur Verfügung zu haben. Diese Informationen bestehen beispielsweise darin, dass ein Generator ausgefallen ist, dass eine Übertemperatur vorliegt, dass ein Generator nicht mehr dreht, usw.. Wenn es notwendig ist, kann aufgrund dieser Informationen ein Generator ausgetauscht werden, um die gewünschte Spannungsversorgung weiterhin zu gewährleisten.

Zum Zwecke dieser Überwachung bzw. Diagnose werden den einzelnen Generatoreinheiten von einem Steuergerät 5 über dessen Datenschnittstelle C5 und einen Datenbus 6 Anfragesignale zugeführt. Als Antwort auf diese Anfragesignale übermittelt die jeweilige Generatoreinheit über den Datenbus 6 Daten an das Steuergerät, die den Zustand des Generators der jeweiligen Generatoreinheit veranschaulichen.

Bei dieser Übertragung der Anfragesignale an die jeweilige Generatoreinheit und bei der Übertragung der den Generatorzustand beschreibenden Daten werden die genannten Nutzdaten zusammen mit einer individuellen Adresse übertragen, die die jeweilige Generatoreinheit und damit auch den jeweiligen Generator spezifiziert.

Diese individuellen Adressen der Generatoreinheiten werden bei der vorliegenden Erfindung wie folgt festgelegt bzw. vergeben:

Nach einem Startvorgang wird von einem Startsignalgeber, bei dem es sich bei dem in der Figur 1 gezeigten Ausführungsbeispiel um ein Steuergerät 5 handelt, ein Startsignal ausgegeben. Ein Startvorgang erfolgt beispielsweise nach jedem neuen Anlassen des Motors und auch nach jedem Reset des Systems, wie er beispielsweise nach dem Auftreten einer Fehlfunktion durchgeführt wird.

Das Startsignal s1 wird beim gezeigten Ausführungsbeispiel an einem Ausgang S des Steuergerätes 5 ausgegeben.

Dieses Startsignal s1 wird einem Steuersignaleingang In1 der ersten Generatoreinheit 1 zugeführt. Der Regler dieser Generatoreinheit 1 erkennt das Vorliegen des Startsignals s1 und überprüft danach, ob ihm über den Steuersignaleingang In1 ein Adressvergabestartsignal s2 und ein vorgegebenes Steuersignal s3 bereitgestellt werden. Beim Steuersignal s3 handelt es sich beispielsweise um einen bestimmten Spannungspegel. Liegen das Adressvergabestartsignal s2 und das Steuersignal s3. vor, dann ordnet der Regler sich selbst bzw. der ersten Generatoreinheit 1 eine individuelle Adresse zu, beispielsweise die Adresse "1". Weiterhin erkennt er anhand des Steuersignals s3, dass er für den nachfolgenden Parallelbetrieb der Generatoren Masterfunktionen ausüben soll. Ferner stellt er an einem Steuersignalausgang Out1 der ersten Generatoreinheit 1 ein Kennungssignal k1 zur Verfügung. Bei diesem Kennungssignal k1 handelt es sich um einen Impuls der zeitlichen Länge t1.

Dieses Kennungssignal k1 enthält eine Information darüber, dass es von einer Generatoreinheit stammt, die sich selbst die Adresse "1" zugeordnet hat, und wird an den Steuersignaleingang In2 der zweiten Generatoreinheit 2 angelegt. Der Regler dieser zweiten Generatoreinheit 2 erkennt das Vorliegen des Kennungssignals k1 und ordnet sich selbst bzw. der zweiten Generatoreinheit 2 eine individuelle Adresse zu, beispielsweise die Adresse "2". Weiterhin erkennt er anhand des Kennungssignals k1, dass er für den nachfolgenden Parallelbetrieb der Generatoren Slavefunktion übernehmen soll. Ferner stellt er an einem Steuersignalausgang Out2 der zweiten Generatoreinheit 2 ein Kennungssignal k2 zur Verfügung. Bei diesem Kennungssignal k2 handelt es sich um zwei aufeinanderfolgende Impulse der zeitlichen Länge t1. Folglich hat das Kennungssignal k2 insgesamt die zeitliche Länge 2t1.

Dieses Kennungssignal k2 enthält eine Information darüber, dass es von einer Generatoreinheit stammt, die sich selbst die Adresse "2" zugeordnet hat, und wird an den Steuersignaleingang In3 der dritten Generatoreinheit 3 angelegt. Der Regler dieser dritten Generatoreinheit erkennt das Vorliegen des Kennungssignals k2 und ordnet sich selbst bzw. der dritten Generatoreinheit 3 eine individuelle Adresse zu, beispielsweise die Adresse "3". Weiterhin erkennt er anhand des Kennungssignals k2, dass er für den nachfolgenden Parallelbetrieb der Generatoren Slavefunktion übernehmen soll. Ferner stellt er an einem Steuersignalausgang Out3 der dritten Generatoreinheit 3 ein Kennungssignal k3 zur Verfügung. Beim Kennungssignal k3 handelt es sich um drei aufeinanderfolgende Impulse der zeitlichen Länge t1. Folglich hat das Kennungssignal k3 insgesamt die zeitliche Länge 3t1.

Dieses Kennungssignal k3 enthält eine Information darüber, dass es von einer Generatoreinheit stammt, die sich selbst die Adresse "3" zugeordnet hat, und wird an den Steuersignaleingang In4 der vierten Generatoreinheit 4 angelegt. Der Regler dieser vierten Generatoreinheit erkennt das Vorliegen des Kennungssignals k3 und ordnet sich selbst bzw. der vierten Generatoreinheit 4 eine individuelle Adresse zu, beispielsweise die Adresse "4". Weiterhin erkennt er anhand des Kennungssignals k3, dass er für den nachfolgenden Parallelbetrieb der Generatoren Slavefunktion übernehmen soll. Ferner stellt er an einem Steuersignalausgang Out4 der vierten Generatoreinheit 4 ein Kennungssignal k4 zur Verfügung. Beim Kennungssignal k4 handelt es sich um vier aufeinanderfolgende Impulse der zeitlichen Länge t1. Folglich hat das Kennungssignal k4 insgesamt die zeitliche Länge 4t1.

Die Adressen, die sich die Generatoreinheiten selbst zugeordnet haben, werden von der jeweiligen Generatoreinheit über ihre jeweilige Datenschnittstelle C1, C2, C3, C4 und den Datenbus 6 an das Steuergerät 5 übermittelt und in diesem abgespeichert.

Die Übermittlung der Adressen von den Generatoreinheiten an das Steuergerät 5 kann automatisch dann erfolgen, wenn sich die jeweilige Generatoreinheit ihre individuelle Adresse zugeordnet hat, oder dann, wenn sich alle Generatoreinheiten ihre individuelle Adresse zugeordnet haben. Alternativ dazu ist es auch möglich, dass das Steuergerät 5 nach Ablauf einer vorgegebenen Zeitspanne nach dem Auftreten des Startsignals Abfragesignale über den Datenbus aussendet, auf welche die Generatoreinheiten reagieren, um dem Steuergerät zu signalisieren, dass sie vorhanden sind und welche Adresse sie jeweils haben.

Das Neuzuordnen von Adressen nach jedem Anlassen des Motors und nach jedem System-Reset hat auch den Vorteil eines flexiblen Parallelbetriebes. Beispielsweise kann im Rahmen von Service-Arbeiten eine der Generatoreinheiten entfernt werden. Dieses Entfernen wird beim nächsten Neuzuordnen von Adressen erkannt, da nur noch drei Generatoreinheiten Adresssignale an das Steuergerät rückmelden. Es muss lediglich dafür gesorgt werden, dass die Generatoreinheiten bezüglich ihrer Steuersignaleingänge- und - ausgänge eine Reihenschaltung bilden, die nicht unterbrochen sein darf. Beispielsweise muss bei einem Entfernen der dritten Generatoreinheit 3 der Steuersignalausgang Out2 der zweiten Generatoreinheit 2 mit dem Steuersignaleingang In4 der vierten Generatoreinheit 4 verbunden werden.

Weiterhin kann im Rahmen von Servicearbeiten auch eine zusätzliche Generatoreinheit angehängt werden. Dieses Anhängen wird beim nächsten Neuzuordnen von Adressen erkannt, da nunmehr fünf Generatoreinheiten Adresssignale an das Steuergerät rückmelden. Es muss lediglich dafür gesorgt werden, dass die Generatoreinheiten bezüglich ihrer Steuersignaleingänge und -ausgänge eine Reihenschaltung bilden, die nicht unterbrochen sein darf. Beispielsweise muss beim Anhängen einer fünften Generatoreinheit dafür Sorge getragen werden, dass der Steuersignalausgang Out4 der vierten Generatoreinheit 4 mit dem Steuersignaleingang der fünften Generatoreinheit verbunden wird.

Beim vorstehend beschriebenen Ausführungsbeispiel wurde das Startsignal s1 und das Adressvergabestartsignal s2 an einem Ausgang S des Steuergerätes 5 zur Verfügung gestellt. Gemäß einer anderen, nicht in der Figur 1 dargestellten Ausführungsform kann das Startsignal s1 auch von einem anderen Startsignalgeber bereitgestellt und der ersten Generatoreinheit 1 über deren Datenschnittstelle C1 zugeführt werden. Ebenso kann auch das Adressvergabestartsignal s2 der ersten Generatoreinheit 1 über die Datenschnittstelle C1 zugeführt werden.

Beim oben beschriebenen Ausführungsbeispiel liegt zum Zeitpunkt der Ausgabe des Startsignals an den Steuersignalausgängen Out1, Out2, Out3 und Out4 ein Low-Pegel-Signal vor. Alternativ dazu kann zum Zeitpunkt der Ausgabe des Startsignals an den Steuersignalausgängen Out1, Out2, Out3 und Out4 auch ein anderes Signal vorliegen, das jedoch vom Steuersignal s3 unterscheidbar sein muss.

Die Figur 2 zeigt eine detailliertere Darstellung der ersten Generatoreinheit 1 von Figur 1.

Die Generatoreinheit 1 weist einen Regler 7 und einen Generator 8 auf. Der Regler 7 ist in Form einer integrierten Schaltung realisiert oder in Form einer Schaltung mit diskreten Bauelementen aufgebaut.

Dem Regler 7 werden als Eingangssignale das am Steuersignaleingang In1 der Generatoreinheit 1 anliegende Startsignal s1, das Adressvergabestartsignal s2 und das Steuersignal s3 zugeführt. Im späteren Parallelbetrieb werden dem Regler 7 die pulsbreitenmodulierte Ansteuersignale PWM1 zugeführt. Der Regler 7 identifiziert - angeregt durch das Startsignal s1 und das Adressvergabestartsignal s2 und mit Hilfe des am Steuersignaleingang In1 anliegenden Steuersignals s3 - sich selbst bzw. die Generatoreinheit 1 als Master und ordnet sich selbst eine individuelle Adresse zu. Weiterhin generiert er das Kennungssignal k1 und stellt dieses am Steuersignalausgang Out1 der ersten Generatoreinheit 1 zur Verfügung. Ferner erfolgt über die Datenschnittstelle C1 und den Datenbus 6 die Übermittlung der Adresse, die der Regler sich selbst bzw. der Generatoreinheit 1 zugeordnet hat, an das Steuergerät.

Weiterhin werden im späteren Parallelbetrieb über die Datenschnittstelle C1 Anfragesignale des Steuergerätes an den Regler 7 übertragen und die vom Steuergerät abgefragten Diagnosedaten vom Regler 7 über die Datenschnittstelle C1 und den Datenbus 6 an das Steuergerät übertragen.

Ferner stellt der Regler 7 dem Generator 8 Generatorsteuersignale g zur Verfügung. Der Generator stellt als Reaktion auf diese Generatorsteuersignale g an einem Ausgang einen Gleichspannungsistwert U_{Ist1} zur Verfügung. Dieser wird an den Regler 7 zurückgeführt und dort im Sinne eines Regelvorganges zur Ermittlung neuer Generatorsteuersignale g verwendet. Weiterhin wird der Gleichspannungsistwert an einem Ausgang der ersten Generatoreinheit als positive Versorgungsgleichspannung B+₁ zur Verfügung gestellt.

Weiterhin gibt der Regler 7 im Parallelbetrieb auf einem seiner Anschlüsse, vorzugsweise über seinen Anschluss Out1, ein Signal aus, das den Auslastungsgrad des Generators 8 beschreibt.

Der Aufbau der Generatoreinheiten 2, 3 und 4 stimmt mit dem Aufbau der Generatoreinheit 1 überein, so dass beim gezeigten Ausführungsbeispiel vier parallelgeschaltete Generatoreinheiten gleichen Aufbaus zur Bereitstellung der Versorgungsgleichspannung für die Verbraucher eines Kraftfahrzeugbordnetzes beitragen.

Diese Generatoreinheiten ordnen sich nach jedem Startvorgang jeweils selbst eine individuelle Adresse zu. Dabei ordnet sich zunächst die erste Generatoreinheit eine individuelle Adresse zu und gibt an ihrem Steuersignalausgang ein erstes Kennungssignal aus. Die weiteren Generatoreinheiten empfangen jeweils ein am Steuersignalausgang einer ihr vorgeschalteten Generatoreinheit ausgegebenes Kennungssignal und ordnen sich als Reaktion auf den Empfang dieses Kennungssignals eine vom jeweiligen Kennungssignal abhängige individuelle Adresse zu.

Beim oben beschriebenen Ausführungsbeispiel tragen vier parallelgeschaltete Generatoreinheiten zur Bereitstellung der Versorgungsgleichspannung bei. Alternativ dazu können auch insgesamt 2, 3, 5, 6 oder auch eine größere Anzahl von parallelgeschalteten Generatoreinheiten zur Bereitstellung der gewünschten Versorgungsgleichspannung verwendet werden.

Bei dem oben beschriebenen Ausführungsbeispiel enthält das Kennungssignal jeweils eine Information darüber, von welcher Generatoreinheit es stammt, und der Regler der das Kennungssignal empfangenden Generatoreinheit ordnet sich selbst anhand der Länge des empfangenen Kennungssignals eine individuelle Adresse zu. Weiterhin generiert der Regler ein neues Kennungssignal, dessen zeitliche Länge im Vergleich zum empfangen Kennungssignal vergrö-βert ist, vorzugsweise um eine Zeiteinheit, und stellt dieses neue Kennungssignal am Steuersignalausgang der jeweiligen Generatoreinheit zur Verfügung.

Die Figur 3 zeigt Zeitdiagramme zur Veranschaulichung der erfindungsgemäßen Adressvergabe.

Dabei ist in der Figur 3a das am Ausgang Out1 der in Figur 1 gezeigten Generatoreinheit 1 bereitgestellte Kennungssignal k1 dargestellt, bei welchem es sich um einen Impuls der zeitlichen Länge t1 handelt. Dieses Kennungssignal k1 wird zur Verringerung der Wahrscheinlichkeit von Übertragungsfehlern zweimal - wie ebenfalls aus der Figur 3a ersichtlich ist - oder noch öfter zur Verfügung gestellt.

In der Figur 3b ist das am Ausgang Out2 der in der Figur 1 gezeigten Generatoreinheit 2 bereitgestellte Kennungssignal k2 dargestellt, welches insgesamt die zeitliche Länge 2t1 aufweist. Dieses Kennungssignal k2 wird ebenfalls zweimal oder öfter zur Verfügung gestellt.

In der Figur 3c ist das am Ausgang Out3 der in der Figur 1 gezeigten Generatoreinheit 3 bereitgestellte Kennungssignal k3 dargestellt, welches insgesamt die zeitliche Länge 3t1 aufweist. Dieses Kennungssignal k3 wird ebenfalls zweimal oder öfter zur Verfügung gestellt.

In der Figur 3d ist das am Ausgang Out4 der in der Figur 1 gezeigten Generatoreinheit 4 bereitgestellte Kennungssignal k4 dargestellt, welches insgesamt die zeitliche Länge 4t1 aufweist. Dieses Kennungssignal k4 wird ebenfalls zweimal oder öfter zur Verfügung gestellt.

Beim oben beschriebenen Ausführungsbeispiel werden den Generatoreinheiten im Parallelbetrieb jeweils über einen separaten Eingang pulsbreitenmodulierte Steuersignale zugeführt. Alternativ dazu ist es auch möglich, die oben beschriebene Adressvergabe während einer Initialisierungsphase durchzuführen und nach Beendigung der Initialisierungsphase für den nachfolgenden Parallelbetrieb die Funktion der Steuersignaleingänge und Steuersignalausgänge zu ändern. So kann im Parallelbetrieb die Generatoreinheit 1 an ihrem Steuersignalausgang Out1 ein pulsbreitenmoduliertes Steuersignal ausgeben. Alle anderen Generatoreinheiten erhalten dieses Signal an ihren Steuersignaleingängen und geben es unverändert an ihren Steuersignalausgängen wieder aus. Dadurch kann der Auslastungsgrad der Generatoren in Übereinstimmung gebracht werden.

Weiterhin handelt es sich beim oben beschriebenen Ausführungsbeispiel bei den Signalen s1 und s2 um Signale, welche zu unterschiedlichen Zeitpunkten auftreten. Gemäß einer anderen Ausführungsform der Erfindung liegt nur ein einziges Startsignal vor, welches als Startsignal und zugleich als Adressvergabestartsignal dient.

## Patentansprüche

1. Verfahren zur Adressvergabe in einem System mit einer ersten Generatoreinheit und mindestens einer parallel zur ersten Generatoreinheit angeordneten weiteren Generatoreinheit, wobei jede der Generatoreinheiten einen Steuersignaleingang und einen Steuersignalausgang aufweist und wobei der Steuersignaleingang jeder weiteren Generatoreinheit jeweils mit dem Steuersignalausgang einer anderen der Generatoreinheiten verbunden ist, **dadurch gekennzeichnet, dass** die weiteren Generatoreinheiten jeweils ein am Steuersignalausgang einer ihr vorgeschalteten Generatoreinheit ausgegebenes Kennungssignal empfangen und sich selbst eine vom jeweils empfangenen Kennungssignal abhängige individuelle Adresse zuordnen, die von der zeitlichen Länge des empfangenen Kennungssignals abhängig ist.

2. Verfahren nach Anspruch 1, **dadurch gekennzeichnet, dass** der ersten Generatoreinheit über ihren Steuersignaleingang ein spezifisches Signal zugeführt wird, anhand dessen sie sich als Master identifiziert, und die erste Generatoreinheit die Selbstzuordnung der Adressen der weiteren Generatoreinheiten durch die Ausgabe eines Kennungssignals an ihrem Steuersignalausgang initiiert.

3. Verfahren nach Anspruch 2, **dadurch gekennzeichnet, dass** der ersten Generatoreinheit über ihre Datenschnittstelle ein Aufforderungssignal zugeführt wird und die erste Generatoreinheit als Reaktion auf den Empfang des Aufforderungssi-gnals die Selbstzuordnung der Adressen der weiteren Generatoreinheiten durch die Ausgabe des Kennungssignals initiiert.

4. Verfahren nach einem der vorhergehenden Ansprüche, **dadurch gekennzeichnet, dass** jede der weiteren Generatoreinheiten an ihrem Steuersignaleingang ein Kennungssignal empfängt und ein modifiziertes Kennungssignal an ihrem Steuersignalausgang ausgibt, dessen zeitliche Länge im Vergleich zum empfangenen Kennungssignal vergrö-βert ist.

5. Verfahren nach einem der vorhergehenden Ansprüche, **dadurch gekennzeichnet, dass** jede Generatoreinheit das von ihr an ihrem Steuersignalausgang ausgegebene Kennungssignal mehrmals ausgibt.

6. Verfahren nach einem der vorhergehenden Ansprüche, **dadurch gekennzeichnet, dass** die Generatoreinheiten ihre individuelle Adresse über ihre Datenschnittstelle und einen Datenbus an ein Steuergerät übermitteln.

7. Verfahren nach Anspruch 6, **dadurch gekennzeichnet, dass** die Generatoreinheiten ihre individuelle Adresse nach dem Empfang eines vom Steuergerät ausgegebenen Abfragesignals über den Datenbus an das Steuergerät übermitteln.

8. Vorrichtung zur Durchführung eines Verfahrens nach einem der vorhergehenden Ansprüche, mit
- einer ersten Generatoreinheit (1) und
- mindestens einer parallel zur ersten Generatoreinheit angeordneten weiteren Generatoreinheit (2,3,4), wobei
- jede Generatoreinheit (1,2,3,4) einen Steuersignaleingang (In1,In2,In3,In4), einen Steuersignalausgang (Out1,Out2,Out3,Out4) und eine Datenschnittstelle (C1,C2,C3,C4) aufweist,
**dadurch gekennzeichnet, dass**
- die Steuersignaleingänge der weiteren Generatoreinheiten jeweils mit dem Steuersignalausgang einer ihr vorgeschalteten Generatoreinheit verbunden sind.

9. Vorrichtung nach Anspruch 8, **dadurch gekennzeichnet, dass** sie weiterhin einen Datenbus (6) aufweist, an welchen die Datenschnittstellen (C1,C2,C3,C4) der Generatoreinheiten (1,2,3,4) angeschlossen sind.

10. Vorrichtung nach Anspruch 9, **dadurch gekennzeichnet, dass** die Datenschnittstellen der Generatoreinheiten über den Datenbus mit einem Steuergerät (5) verbunden sind.

11. Vorrichtung nach Anspruch 10, **dadurch gekennzeichnet, dass** die Generatoreinheiten (1,2,3,4) jeweils einen Regler (7) und einen Generator (8) aufweisen, die Selbstzuordnung der individuellen Adresse durch den Regler der jeweiligen Generatoreinheit erfolgt und der Regler dazu vorgesehen ist, die individuelle Adresse über den Datenbus an das Steuergerät zu übermitteln.

12. Vorrichtung nach Anspruch 11, **dadurch gekennzeichnet, dass** der Regler dazu vorgesehen ist, die individuelle Adresse nach dem Empfang eines vom Steuergerät ausgegebenen Abfragesignals über den Datenbus an das Steuergerät zu übermitteln.

13. Vorrichtung nach einem der Ansprüche 8 - 12, **dadurch gekennzeichnet, dass** die parallel geschalteten Generatoreinheiten zur Bereitstellung der Versorgungsspannung für die Verbraucher eines Fahrzeug-Bordnetzes vorgesehen sind.

## Claims

1. Method for assigning addresses in a system comprising a first generator unit and at least one further generator unit which is arranged parallel to the first generator unit, wherein each of the generator units has a control signal input and a control signal output, and wherein the control signal input of each further generator unit is respectively connected to the control signal output of another of the generator units, **characterized in that** the further generator units respectively receive an identifier signal which is output at the control signal output of a generator unit which is connected upstream thereof, and the further generator units themselves assign an individual address which is dependent on the respectively received identifier signal and is dependent on the chronological length of the received identifier signal.

2. Method according to Claim 1, **characterized in that** a specific signal is fed to the first generator unit via its control signal input, and on the basis of said signal said generator unit identifies itself as a master, and the first generator unit initiates the self-assignment of the addresses of the further generator units by outputting an identifier signal at its control signal output.

3. Method according to Claim 2, **characterized in that** a request signal is fed to the first generator unit via its data interface, and the first generator unit initiates, in reaction to the reception of the request signal, the self-assignment of the addresses of the further generator units as a result of the outputting of the identifier signal.

4. Method according to one of the preceding claims, **characterized in that** each of the further generator units receives an identifier signal at its control signal input and outputs a modified identifier signal at its control signal output, the chronological length of the latter being increased compared to the received identifier signal.

5. Method according to one of the preceding claims, **characterized in that** each generator unit repeatedly outputs the identifier signal which is output by it at its control signal output.

6. Method according to one of the preceding claims, **characterized in that** the generator units transmit their individual address to a control unit via their data interface and a data bus.

7. Method according to Claim 6, **characterized in that** the generator units transmit their individual address to the control unit via the data bus after the reception of an interrogation signal which has been output by the control unit.

8. Device for carrying out a method according to one of the preceding claims, having
- a first generator unit (1), and
- at least one further generator unit (2, 3, 4) which is arranged parallel to the first generator unit, wherein
- each generator unit (1, 2, 3, 4) has a control signal input (In1, In2, In3, In4), a control signal output (Out1, Out2, Out3, Out4) and a data interface (C1, C2, C3, C4),
**characterized in that**
- the control signal inputs of the further generator units are each connected to the control signal output of a generator unit which is connected upstream thereof.

9. Device according to Claim 8, **characterized in that** said device also has a data bus (6) to which the data interfaces (C1, C2, C3, C4) of the generator units (1, 2, 3, 4) are connected.

10. Device according to Claim 9, **characterized in that** the data interfaces of the generator units are connected to a control unit (5) via the data bus.

11. Device according to Claim 10, **characterized in that** the generator units (1, 2, 3, 4) each have a controller (7) and a generator (8), the self-assignment of the individual address is carried out by the controller of the respective generator unit, and the controller is provided for transmitting the individual address to the control unit via the data bus.

12. Device according to Claim 11, **characterized in that** the controller is provided for transmitting the individual address to the control unit via the data bus after the reception of an interrogation signal which has been output by the control unit.

13. Device according to one of Claims 8-12, **characterized in that** the generator units which are connected in parallel are provided for making available the supply voltage for the loads of a vehicle on-board power system.

## Revendications

1. Procédé d'attribution d'adresses dans un système équipé d'une première unité de générateur et d'au moins une unité de générateur supplémentaire disposée parallèlement à la première unité de générateur, chacune des unités de générateur comportant une entrée de signaux de commande et une sortie de signaux de commande et l'entrée de signaux de commande de chaque unité de générateur supplémentaire étant respectivement reliée à une sortie de signaux de commande d'une autre des unités de générateur, **caractérisé en ce que** les unités de générateur supplémentaires reçoivent respectivement un signal d'identification envoyé à la sortie de signaux de commande d'une unité de générateur connectée en amont et s'associent elles-mêmes à une adresse individuelle dépendant respectivement du signal d'identification reçu, ladite adresse dépendant de la longueur dans le temps du signal d'identification reçu.

2. Procédé selon la revendication 1, **caractérisé en ce qu'**un signal spécifique est envoyé à la première unité de générateur par le biais de son entrée de signaux de commande, ledit signal lui permettant de s'identifier comme maître et la première unité de générateur lançant l'auto-association des adresses des unités de générateur supplémentaires par l'envoi d'un signal d'identification à sa sortie de signaux de commande.

3. Procédé selon la revendication 2, **caractérisé en ce qu'**un signal d'invitation est envoyé à la première unité de générateur par le biais de son interface de données et que la première unité de générateur lance, en réaction à la réception du signal d'invitation, l'auto-association des adresses des unités de générateur supplémentaires par l'envoi du signal d'identification.

4. Procédé selon l'une quelconque des revendications précédentes, **caractérisé en ce que** chacune des unités de générateur supplémentaires reçoit un signal d'identification au niveau de son entrée de signaux de commande et envoie un signal d'identification modifié au niveau de sa sortie de signaux de commande dont la longueur dans le temps est comparativement accrue par rapport au signal d'identification reçu.

5. Procédé selon l'une quelconque des revendications précédentes, **caractérisé en ce que** chaque unité de générateur envoie plusieurs fois le signal d'identification envoyé par elle au niveau de sa sortie de signaux de commande.

6. Procédé selon l'une quelconque des revendications précédentes, **caractérisé en ce que** les unités de générateur transmettent leur adresse individuelle à un appareil de commande par le biais de leur interface de données et d'un bus de données.

7. Procédé selon la revendication 6, **caractérisé en ce qu'**à réception d'un signal d'interrogation envoyé par l'appareil de commande, les unités de générateur transmettent leur adresse individuelle à l'appareil de commande par le biais du bus de données.

8. Dispositif de mise en oeuvre d'un procédé selon l'une quelconque des revendications précédentes, équipé :
- d'une première unité de générateur (1) ; et
- d'au moins une unité de générateur (2, 3, 4) supplémentaire disposée parallèlement à la première unité de générateur ;
- chaque unité de générateur (1, 2, 3, 4) comportant une entrée de signaux de commande (In1, In2, In3, In4), une sortie de signaux de commande (Out1, Out2, Out3, Out4) et une interface de données (C1, C2, C3, C4) ; **caractérisé en ce que** :
- les entrées de signaux de commande des unités de générateur supplémentaires sont respectivement reliées à la sortie de signaux de commande d'une unité de générateur connectée en amont par rapport à elles.

9. Dispositif selon la revendication 8, **caractérisé en ce qu'**il comporte en outre un bus de données (6) auquel sont rattachées les interfaces de données (C1, C2, C3, C4) des unités de générateur (1, 2, 3, 4).

10. Dispositif selon la revendication 9, **caractérisé en ce que** les interfaces de données des unités de générateur sont reliées à un appareil de commande (5) par le biais du bus de données.

11. Dispositif selon la revendication 10, **caractérisé en ce que** les unités de générateur (1, 2, 3, 4) comportent respectivement un régulateur (7) et un générateur (8), l'auto-association de l'adresse individuelle se produisant par le biais du régulateur de l'unité de générateur respective et le régulateur étant conçu pour transmettre l'adresse individuelle à l'appareil de commande par le biais du bus de données.

12. Dispositif selon la revendication 11, **caractérisé en ce que** le régulateur est conçu pour transmettre l'adresse individuelle à l'appareil de commande par le biais du bus de données après réception d'un signal d'interrogation envoyé par l'appareil de commande.

13. Dispositif selon l'une quelconque des revendications 8 à 12, **caractérisé en ce que** les unités de générateur connectées en parallèle sont conçues pour mettre à disposition la tension d'alimentation pour le dissipateur d'un réseau de bord de véhicule.
